# EUROPEAN PATENT SPECIFICATION

(11) **EP 1 376 401 B1**
(45) Date of publication and mention of the grant of the patent: **30.09.2009**
(21) Application number: 03013393.8
(22) Date of filing: 18.06.2003
(51) Int. Cl.: G06F 17/30

(54) **Method and system for creation and use of webs of linked documents**
Verfahren und Vorrichtung zur Erzeugung und Nutzung von Web-Standorten mit verbundenen Dokumenten
Système et procédé pour la création et utilisation de sites web constitués de documents reliés

(30) Priority: 19.06.2002 US 176248
(43) Date of publication of application: 02.01.2004
(73) Proprietor: PITNEY BOWES INC., Stamford, CT 06926-0700 (US)
(72) Inventor: Cordery, Robert A., Danbury, Connecticut 06811 (US); Campagna, Matthew J., Ridgefield, Connecticut 06877 (US); Foth, Thomas J., Trumbull, Connecticut 06611 (US); Hammell, Bradley R., Fairfield, Connecticut 06825 (US); Massucci, John E., Eastchester, New York 10709 (US); Romansky, Brian, Monroe, Connecticut 06468 (US); Ryan, Frederick W., Jr., Oxford, Connecticut 06478 (US)
(74) Representative: HOFFMANN EITLE

(56) References cited:
- EP-A- 0 987 636
- US-B1- 6 263 121
- NENTWICH C ET AL: "XLINKIT: LINKS THAT MAKE SENSE" RESEARCH PROJECT RN 01 06, [Online] 2001, XP002284930 DEPARTMENT OF COMPUTER SCIENCE, UNIVERSITY COLLEGE LONDON Retrieved from the Internet: URL:http://www.cs.ucl.ac.uk/staff/c.nentwi ch/publications/RN/ht2001.html.> [retrieved on 2004-06-16]
- BLUEMLINGER K: "ADVANCED LINK MANAGEMENT IN HYPERMEDIA SYSTEMS" PHD THESIS, [Online] November 2000 (2000-11), XP002284931 Retrieved from the Internet: URL:http://www.iicm.edu/thesis/bluemlinger .pdf> [retrieved on 2004-06-16]
- SHMARANZ K: "ON SECOND GENERATION DISTRIBUTED COMPONENTS SYSTEMS" JOURNAL OF UNIVERSAL COMPUTER SCIENCE, [Online] vol. 8, no. 1, 28 January 2002 (2002-01-28), pages 97-116, XP002284932 Retrieved from the Internet: URL:http://www.jucs.org/jucs_8_1/on_second _generation_distributed/paper.pdf> [retrieved on 2004-06-16]
- DAMIANI E. ET AL CONFERENCE PROCEEDINGS, ADVANCES IN DATABASE TECHNOLOGY - EDBT 2000. 7TH INTERNATIONAL CONFERENCE ON EXTENDING DATABASE TECHNOLOGY., [Online] 2000, pages 121 - 135 Retrieved from the Internet: <URL:http://citeseer.ist.psu.edu/damiani00s ecuring.html> [retrieved on 2007-05-25]
- MICROSOFT: "Real-Time Applications" INTERNET PUBLICATION, [Online] 29 June 1995 (1995-06-29), Retrieved from the Internet: URL:http://msdn.microsoft.com/en-us/librar y/ms810433(printer).aspx> [retrieved on 2008-10-29]

## Description

The present invention relates to linked information retrieval. More particularly it relates to a method and system for creating links between files that define documents (i.e. formatted data) and for using such links to enable a flow of information among such files.

While present data processing techniques for accessing, updating and applying data residing in digital documents have been highly successful they are in many ways inefficient and cumbersome. A typical personal computer (hereinafter "PC") will contain files in many formats. Most of these files are documents; digital representations of what could as well be paper documents. Heretofore, it has been difficult to provide active (i.e. process) links between documents, and such links have only been infrequently provided between specifically identified documents. (Languages such as HTML are capable of providing links between data in documents, but do not provide process links.) Users, and particularly ordinary users of PC's, rely on software developers to provide programs to carry out any desired processes. As a result when a user wishes to carry out an application the user is dependent upon the software developer to understand the application desired by the user (at least approximately) and the developer must somehow know or control the particular files to be accessed. The confusion, delay, and general aggravation that result from this arrangement are too well known to require comment here.

Document "XLINKIT: LINKS THAT MAKE SENSE" (XP-002284930, NENTWICH ET AL, UNIVERSITY COLLEGE LONDON), relates to XLinkit, a rule-based hyperlink generation and consistency checking service. The contents of distributed XML files are related by writing rules that exploit the semantics exposed by the structure of the documents (e.g. sample syllabus files). Meaningful links are generated from the rules relating to documents (for example regarding matching courses in a curriculum and syllabus), resulting in two types of links (inconsistent and consistent), depending on whether the relationship in the rule holds or is contradicted by the combination of the elements in the documents. The rules can be evaluated to obtain a set of links that provide diagnostic information and can be used for automatic construction of web content.

Thesis "ADVANCED LINK MANAGEMENT IN HYPERMEDIA SYSTEMS" by KARL BLUEMLINGER, GRAZ UNIVERSITY OF TECHNOLOGY, discusses features of a modern link management system and the specification of the XML and Linking Language XLink, which enables designers of a distributed link service (DLS) to use a standardized format that facilitates link maintenance. XML is used as the primary document format and the DLS described uses XLink to describe hyperlinks. The use of semantically-typed links to ease automatic information retrieval is disclosed, and an event mechanism is used to keep links consistent and to avoid dangling links. Every time a resource is removed or deleted, the link service is informed about the changes and updates its link database accordingly.

Accordingly, there is a need for a method and system to enable interaction between documents to increase access to and networking of information, and to improve workflow processes.

These and other needs are addressed by embodiments of the present invention by a system and method and related computer readable media for creating a system of linked documents.

According to the present invention, there is provided a method for creating a system of linked documents as defined by appended independent Claim 1, a data processing system according to appended independent Claim 6 and a computer readable medium according to appended independent Claim 7.

Preferred embodiments are defined in the appended dependent claims.

For a better understanding of the present invention and to show how the same may be carried into effect, reference will now be made, by way of example, to the accompanying drawings, in which:
Figure 1 shows a schematic block diagram of a data processing system for managing networks of linked documents (sometimes hereinafter "Rheodocs") in accordance with an embodiment of the present invention;
Figure 2 shows a data structure for Rheodocs;
Figure 3 shows a schematic block diagram of a data processing system for managing networks of linked documents in accordance with another embodiment of the present invention;
Figure 4 shows a network of Rheodoc systems implementing an application of Rheodocs;
Figure 5 shows a flow diagram of the operation of one of a host system in managing a credit card Rheodoc;
Figure 6 shows a flow diagram of the operation of one of a home system in managing a credit card Rheodoc;
Figure 7 shows a more detailed flow diagram of the operation of a system to determine if an input data file is a Rheodoc;
Figure 8 shows a more detailed flow diagram of the operation of a system to execute existing Rheodocs;
Figure 9 shows a more detailed flow diagram of the operation of a system in carrying out steps of a Rheodoc process (hereinafter sometimes "macro");
Figure 10 shows a more detailed flow diagram of the operation of a system in carrying out steps of another macro; and
Figures 11 and 12 show a flow diagram of a process for deleting a Rheodoc.

In an embodiment, there is provided a method for creating a system of linked documents, said method comprising the steps of: storing a first file, said first file including a document and being linked to a first macro, on a data processing system, said data processing system having a first operating system; said operating system controlling said data processing system to execute said first macro in response to a predetermined first trigger event and to evaluate security rules to decide if execution is permitted by determining if the stored file enables full content inspection of the document and, if full inspection is permitted to create a local pointer to identify the file; and said first macro controlling said data processing system to inspect other files and link selected ones of said stored first file in accordance with predetermined criteria.

There may further be provided a method wherein the predetermined criteria are derived in accordance with values of predetermined data elements of the document.

There may further be provided a method wherein at least one of the other files includes keywords and the macro controls the data processing system to inspect the keywords and list those files where the keywords meet the predetermined criteria.

There may further be provided a method wherein the selected ones of the other files are selected from the listed files after inspection of the other files' full contents in accordance with the predetermined criteria.

There may further be provided a method wherein the selected ones of the other files consist of the listed files.

There may further be provided a method wherein the selected ones of the other files are selected from the other files after inspection of the other files' full contents in accordance with the predetermined criteria.

There may further be provided a method wherein at least one of the other files comprises self-describing data organized in a manner that can be interpreted by the macro.

There may further be provided a method wherein the operating system includes a virtual machine and the macro is expressed in executable code for the virtual machine.

There may further be provided a method wherein the trigger event is the changing, deleting or moving of an existing file on the data processing system.

There may further be provided a method wherein the trigger event is the creation or input of a new file on the data processing system.

The term "computer-readable medium" as used herein refers to any medium that participates in providing instructions to data processing systems for execution. Such a medium may take many forms, including but not limited to, non-volatile media, volatile media, and transmission media. Non-volatile media includes, for example, optical or magnetic disks. Volatile media includes dynamic memory. Transmission media includes coaxial cables, copper wire and fiber optics. Transmission media can also take the form of acoustic or light waves, such as those generated during radio wave and infrared data communications.

A method may be provided wherein the macro is stored centrally, either on the data processing system or on a network, and the stored file is linked to the macro by a pointer. Furthermore, a method may be provided wherein the macro is incorporated in the stored file.

A method and system, and related computer readable media are described. In the following description, for the purposes of explanation, numerous specific details are set forth in order to provide a thorough understanding of the present invention. It will be apparent, however, to one skilled in the art that the present invention can be practiced without these specific details. In other instances, well-known structures and devices are shown in block diagram form in order to avoid unnecessarily obscuring the present invention.

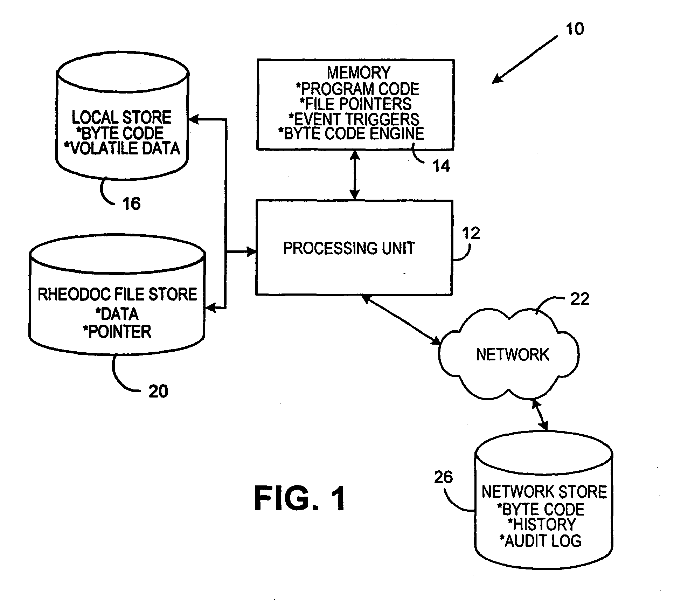

Figure 1 shows Rheodoc system 10, which is a data processing system for managing Rheodocs. As used herein the term "Rheodoc" refers to a file that defines both a document (i.e. structured data) and an associated process which identifies and links to other files of interest, which can be other Rheodocs to form systems of linked files and enable flows of information among such linked files. (Note that the combining form "rheo" means flow.) The associated process is implemented by a program (sometimes hereinafter "macro") that is linked to the file. System 10 includes Processing Unit 12, Memory 14, Local Storage 16 and Rheodoc File Storage 20. Memory 14 stores program code for controlling processing unit 12 to manage Rheodocs and for carrying other applications, file pointers to Rheodoc files on system 10, a list of event triggers which initiate execution of the macros. Preferably memory 14 will also store a byte code engine, or virtual machine, to execute macros, as will be described further below. (A byte code engine, or virtual machine, is an application on an actual data processing system that responds to the machine code for, and, emulates the operation of, a different system, which typically does not exist in physical form. Such virtual machine code is referred to as "byte code" by those skilled in the art.) Local Store 16 stores byte code for Rheodoc macros and variable data. Variable data is temporarily stored data including intermediate results, history and audit data. Rheodoc File Store 20 stores Rheodocs as files that comprise a document and linking data linking the file to the byte code and variable data. In Figure 1 the linking data are pointers. In one embodiment of the present invention the pointers link to Local Store 16. In another embodiment the pointers link to Network Store 26 through Network 22.

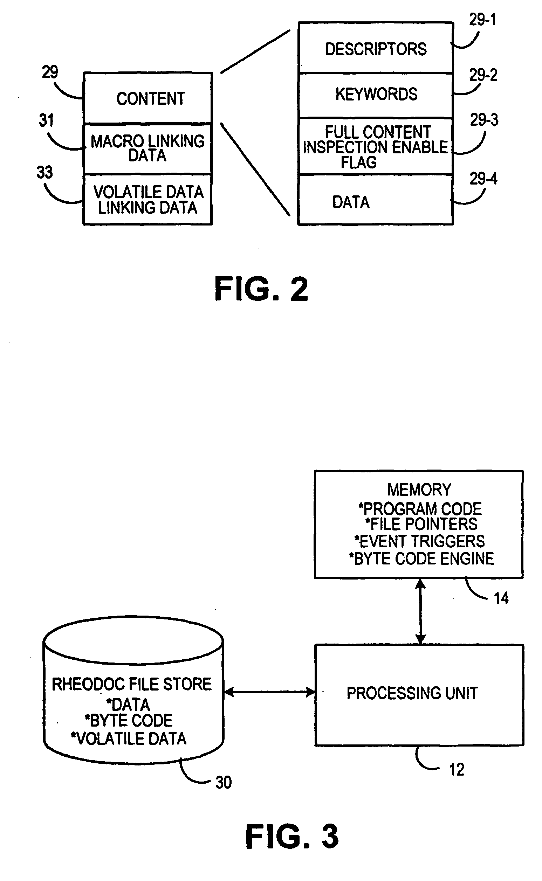

Figure 2 shows a preferred Rheodoc file structure. The Rheodoc includes content 29, macro linking data 31, and volatile linking data 33. The content includes descriptors 29-1 describing the data structure in a conventional self descriptive data format, optional keywords 29- 2, full content inspection enable flag 29-3, and data 29-4. Files having content 29 only can be linked by Rheodoc macros but, of course, cannot link other files.

Figure 3 shows another embodiment of the present invention. In Figure 3 Processing Unit 12 and Memory 14 are substantially as described with respect to Figure 1 above. Rheodoc File Store 30 store files where the documents, byte code and variable data are linked directly in each Rheodoc file.

(While implementation of macros as byte code is preferred as efficiently providing compatibility across various types of systems, it should be noted that any convenient form of implementation is within the contemplation of the present invention. For example, if Rheodocs are used on only a single type of system the macros can be implemented in the machine language of that type system; or the macros can be written in a high level language and compiled as the Rheodocs are installed.)

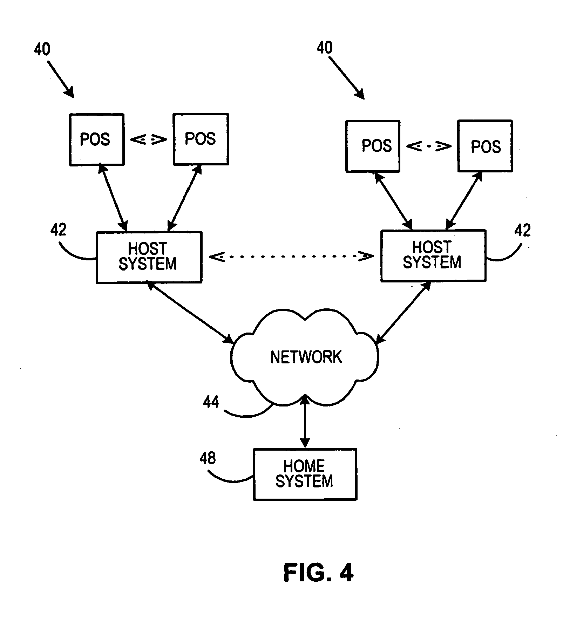

Figure 4 shows a network of Rheodoc systems implementing an exemplary application of Rheodocs: linking credit card receipt information to an expense report template. Pluralities 40 of point of sale systems (hereinafter sometimes "POS's") communicate with corresponding ones of a plurality of host systems 42. Host systems 42 communicate over network 44 with home system 48. (In general communication among the systems of Figure 4 can be carried out in any convenient manner details of which form no part of the present invention.) Host systems 42 and home system 48 are Rheodoc systems. Systems 42 manage "credit card" Rheodocs that inspect and identify files that contain receipt information for particular credit card transactions and send a file of linking data to home system 48. The linking data can be pointers to files containing relevant receipt information or can be the relevant information abstracted from the identified files. Preferably, Rheodoc macros will only provide access to the portions of identified files that contain relevant information. Home system 48 manages an expense report Rheodoc, which includes an expense report template document, and which links the linking data files received from host systems 42 to the expense report template. When an expense report application is opened the receipt information is transferred to the template. (It should be noted that the terms "host system" and "home system" as used herein are not intended to connote any particular architectural differences between systems 42 and system 48 or imply that network 44 is hierarchal; but only to indicate the roles played by these systems in the preferred embodiment described. Preferably systems 42 and 48 comprise a peer-to-peer network and can have other functions in other applications.)

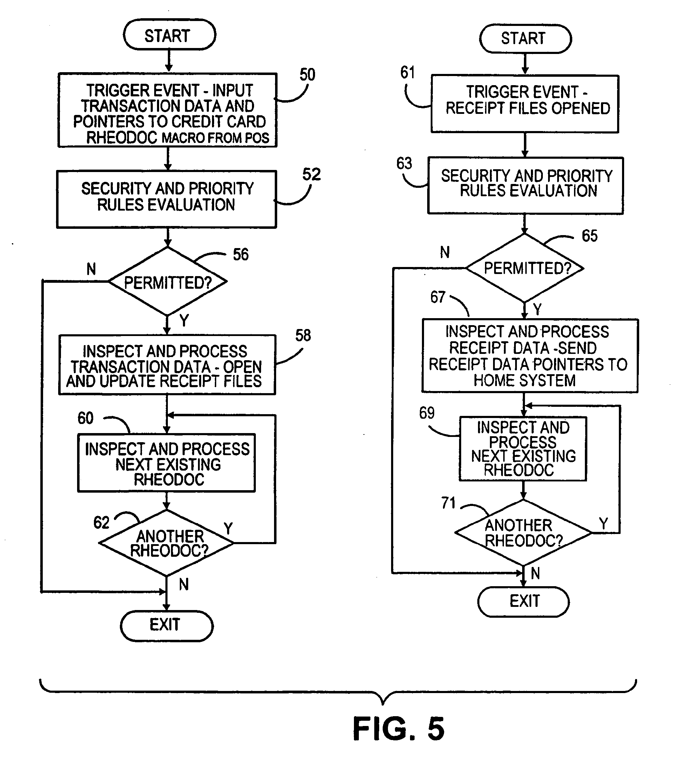

Figure 5 shows a flow diagram of the operation of one of host systems 42 to manage a credit card Rheodoc. In accordance with the present invention a credit card is modified so as to constitute a Rheodoc by the incorporation of a pointer to a Credit Card Rheodoc macro along with conventional credit card information such as card number and expiration date. At step 50 system 42 responds to a trigger event, here the input of transaction data and a pointer to a Credit Card Rheodoc macro from one of POS's 40, to update and process its receipt files, as will be described further below. At step 52 system 42 evaluates security and priority rules to decide if execution is permitted. These rules typically determine whether the execution of this macro is allowed, in the general case, by the system. At step 56, if execution is permitted, system 42 goes to step 58 to inspect and process the transaction data and update the receipt files, as will be described further below. Otherwise system 42 exits and waits for another trigger event. Then at step 60 system 42 inspects and processes the next existing Rheodoc, as will be described further below; that is, the Rheodoc next in priority in the class of Rheodocs whose execution is permitted at step 52. At step 62 system 42 determines if execution of another Rheodoc is permitted and, if so returns to step 60 and otherwise exits to wait for the next trigger event.

When the receipt files are opened for updating at step 58 another trigger event occurs and, at step 61, system 42 responds. At step 63 system 42 evaluates security and priority rules to decide if execution is permitted. These rules typically determine whether the specific executing macro is allowed to access this file at this time. At step 65, if execution is permitted, system 42 goes to step 67 to inspect and process the receipt file data and send a pointer to the receipt file data of interest to home system 48, as will be described further below. Otherwise system 42 exits and waits for another trigger event. Then at step 69 system 42 inspects and processes the next existing Rheodoc, as will be described further below. That is the Rheodoc next in priority in the class of Rheodocs whose execution is permitted at step 63. At step 71 system 42 determined if execution of another Rheodoc is permitted and, if so returns to step 69 and otherwise exits to wait for the next trigger event.

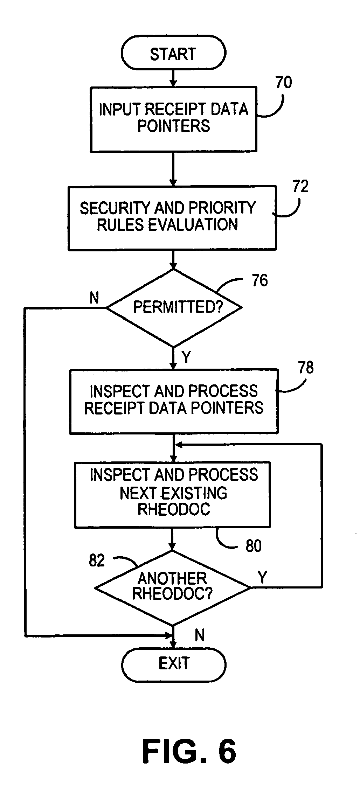

Figure 6 shows a flow diagram of the operation of home system 48 to manage a credit card Rheodoc. At step 70 system 48 responds to a trigger event, here the input of pointers to receipt data to initiate execution of the expense Rheodoc, as will be described further below. At step 72 system 48 evaluates security and priority rules to decide if execution is permitted. At step 76, if execution is permitted, system 48 goes to step 78 to inspect and process the receipt data pointer file, as will be described further below. Otherwise system 48 exits and waits for another trigger event. Then at step 80 system 48 inspects and processes the next existing Rheodoc, as will be described further below. That is the Rheodoc next in priority in the class of Rheodocs whose execution is permitted at step 82. At step 82 system 48 determined if execution of another Rheodoc is permitted and, if so returns to step 80 and otherwise exits to wait for the next trigger event.

It should be noted that while in the described embodiment of the present invention trigger events are the input of data, i.e. the creation or updating of an input data file, other events can be defined as triggers for the execution of the same or different classes of Rheodocs. Such events include, but are not limited to: opening a file to read, write, or execute; closing a file; copying a file; and Rheodoc macro-to-Rheodoc macro messages.

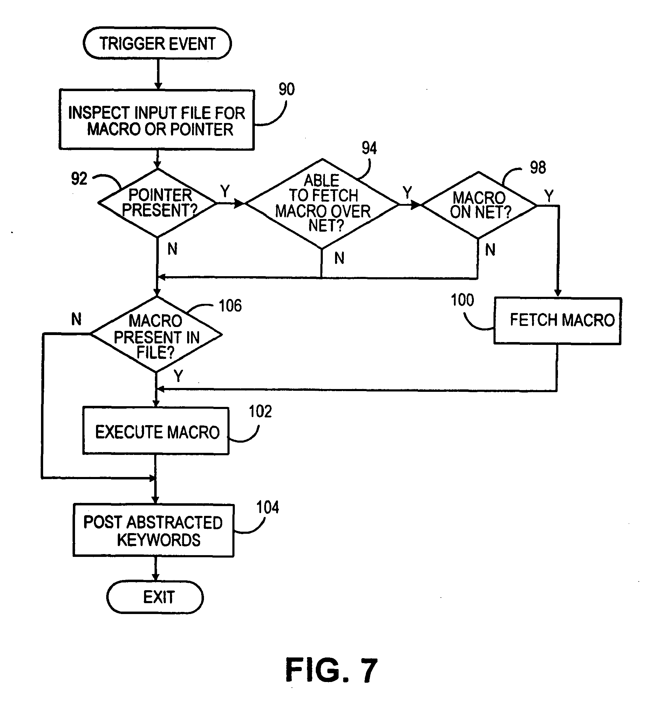

Figure 7 shows a more detailed flow diagram of the operation of systems 42 and 48 in executing steps 58 and 67, and 78 respectively to determine if the input data file is a Rheodoc. Note that in other embodiments of the present invention priority and security rules may not permit of the possibility that files that initiate some or all trigger events are Rheodocs. At step 90 the system inspects the input data file, i.e. the input receipt data file for systems 42 and the linking data file for system 48 for the presence of an associated macro, i.e. actual code in the file, or for pointers to such a macro. At step 92 the system determines if a pointer is present, at step 94 if the system is able to fetch a macro over network 22 (shown in Fig. 1), and at step 98 if a macro is present on network store 26. If the result of all these steps is positive then at step 100 the system fetches the macro and at step 102 executes it, as will be described further below and at step 104 posts abstracted keywords that can have been incorporated in the file. (By posting the abstracted keywords, herein is meant that the keywords in this Rheodoc are sent to all other Rheodocs on the system. This allows the macros in those other Rheodocs to be executed and allows those other Rheodocs to inspect this new file.) If the result at any of steps 92, 94 or 98 is negative then the system goes to step 106 to determine if a macro is directly present in the file and, if so goes to step 102 to execute it and then to step 104, and otherwise goes directly to step 104. Thus the present invention provides a capability to retrieve the most current update of a macro over network 22 if one is available and, otherwise if it is not possible to retrieve a macro over network 22, to execute the macro present in the Rheodoc as a "second best" alternative.

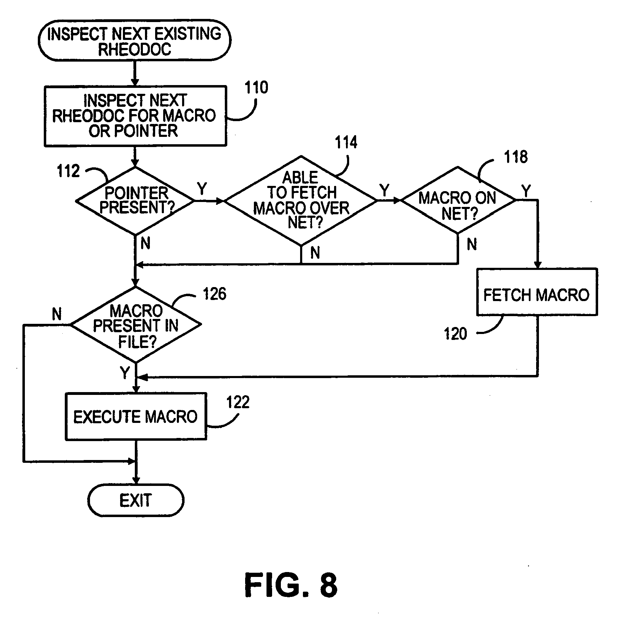

Figure 8 shows a more detailed flow diagram of the operation of systems 42 and 48 in executing steps 60 and 80 respectively to execute existing Rheodocs. At step 110 the system inspects the next existing Rheodoc for the presence of an associated macro, i.e. actual code in the file, or for pointers to such a macro. At step 112 the system determines if a pointer is present, at step 114 if the system is able to fetch a macro over network 22 (shown in Fig. 1), and at step 118 if a macro is present on network store 26. If the result of all these steps is positive then at step 120 the system fetches the macro and at step 122 executes it, as will be described further below. If the result at any of steps 112, 114 or 118 is negative then the system goes to step 126 to determine if a macro is directly present in the file and, if so goes to step 122 to execute it.

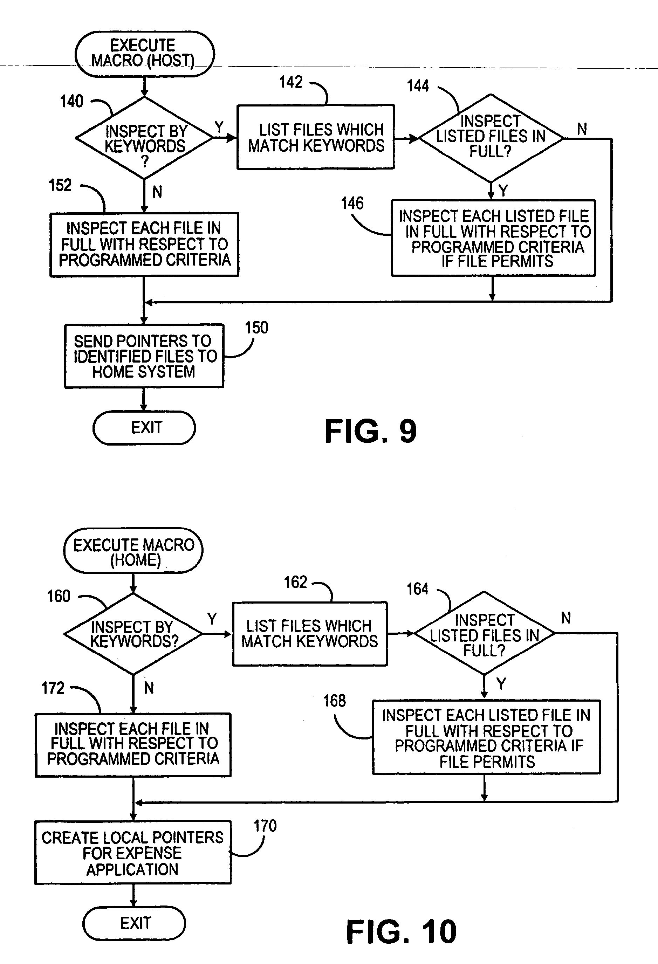

Figure 9 shows a more detailed flow diagram of the operation of systems 42 at step 102 in carrying out steps of a macro. At step 140 system 42 determines if files are to be inspected for keywords. Keywords are preselected words, phrases, or other data items that at least partially identify files incorporated in those files. Rheodoc files may limit the files exposed to a Rheodoc macro by only considering files containing keywords specified by the macro. If files are to be inspected, at step 142 system 42 lists those files whose keywords match predetermined criteria incorporated in the macro. At step 144 system 42 determines if the listed files are to be inspected in full. If so, the full content of listed files is inspected at 146 for those files which enable full content inspection (for reasons of security full content inspection may be prohibited for some files) and at 150 system 42 sends a file of pointers to identified files: i.e. listed files which match the full content criteria and listed files which do not enable full content inspection, to home system 48. Otherwise, at step 150 system 42 (i.e. the macro running on system 42) sends pointers to all listed files to home system 48. If files are not to be inspected for keywords, at 152 system 42 inspects the full content of all files and at 150 sends a file of pointers to identified files whose content matches the criteria.

In some applications of the present invention, macros will simply send pointers of files with matching keywords. The benefit of this is to reduce the time and resources to identify files to be processed by the Rheodocs macro. In other applications, the macro will further qualify files that match the keyword criteria (that is to say that not all files that match the keyword criteria will be of interest, so the macro will need look through the full contents to see if the information is of interest). In still other applications, where it is not possible to determine if files can be limited by keyword and all files will need to be inspected in full. In this manner, in the preferred embodiment described above, macros which are executed in response to input of transaction data to one of host systems 42 can act as "scouts" for home system 48; identifying only files which are of interest to system 48. For example such macros can be structured to only identify receipt files which evidence spending patterns that fall outside predetermined limits, such as restaurant receipts that exceed certain amounts. Decisions made among these various applications allow the macro designer to make tradeoffs between using computer time and resources to inspect each file and send a smaller number of pointers over the network, or to use less computer resources and send more pointers over the network at the expense of network resources.

Figure 10 shows a more detailed flow diagram of the operation of systems 48 at step 122 in carrying out steps a macro. At step 160 system 48 determines if files are to be inspected for keywords. Keywords are preselected words, phrases, or other data items that at least partially identify files incorporated in those files. If so at step 162 system 48 lists those files whose keywords match predetermined criteria incorporated in the macro. At step 164 system 48 determines if the listed files are to be inspected in full. If so, the full content of listed files is inspected at 166 for those files which enable full content inspection and at 170 system 48 creates local pointers to identified files: i.e. listed files which match the full content criteria and listed files which do not enable full content inspection, to home system 48. Otherwise, at step 170 system 48 creates local pointers to all listed files to home system 48. If files are not to be inspected for keywords, at 172 system 48 inspects the full content of all files and at 150 creates local pointers to identified files whose content matches the criteria.

Macro criteria can be predetermined but preferably are paramatized. For example in the present embodiment an expense report template in the expense report Rheodoc will typically include fields defining persons, projects, date ranges, etc. With paramatized criteria, criteria values can be derived from these fields in the Rheodoc document and specific instances of expense reports generated using data from files linked to the template by the Rheodoc macro using these parameters. Those skilled in the art will recognize that compatibility of file formats will be critical for Rheodoc webs of any significant size. In a preferred embodiment fields in a Rheodoc may be stored in an XML (eXtensible Markup Language) format. XML is a well known technology that provides a flexible way to create "self-describing data", and to share both the format and the data on the World Wide Web, intranets, and elsewhere.

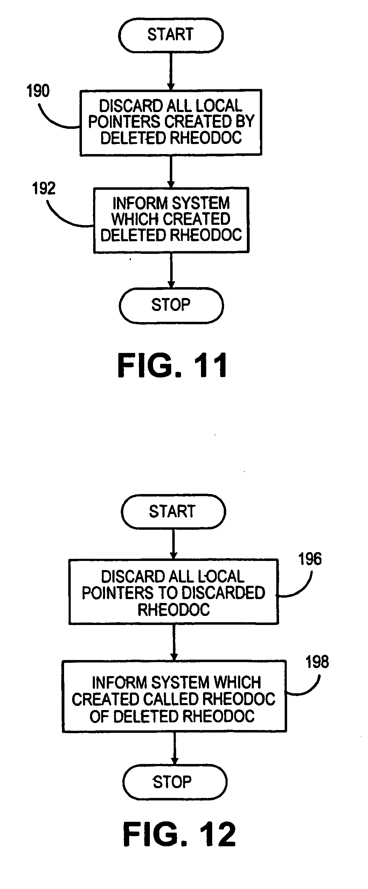

Figures 11 and 12 show the process for deleting a Rheodoc. In Figure 11 when a Rhedoc is deleted on a host system all local pointers created by that Rheodoc are deleted at step 190 and the home system that originated the deleted Rheodoc is informed at step 192. In Figure 12 the home system responds to the information as a trigger event and calls one or more related Rheodocs that delete any local pointers to the deleted Rheodoc they may have created at step 196. At step 198 the called Rheodocs inform the systems which created them of the deleted Rheodoc. This allows other Rheodocs that were interested in the deleted Rheodoc to clean up their pointers. Preferably the macro that discovered and sent the file pointers to the home system will send the fact that file has been deleted to the home system to clean up the home system's local pointers.

In the preferred embodiments of the present invention described above Rheodocs include pointers to centrally stored macros that are stored on a network. In other embodiments such centrally stored macros can be stored on local storage as described above with respect to Figure 1. Central storage of macros is preferred to having macros actually present in the Rheodocs since centrally stored macros can be shared and are easier to maintain.

From consideration of the above preferred embodiment it can be seen that, in accordance with the present invention, the introduction of a Rheodoc to a system causes the system to be extended to perform "safe actions" on behalf of the creator of the Rheodoc. The mere input of the document by a system causes the system to perform services on the behalf of the input document's owner. In the present embodiment input of a Credit Card Rheodoc triggers a macro to update receipt files with current transaction data, opening of these receipt files for updating in turn triggers a macro which sends pointers to a home system, and receipt of these pointers triggers yet another macro which inspects the receipt files in accordance with predetermined criteria. It will be apparent that such a structure can readily be adapted to create a net work of linked Rheodoc documents (credit card, receipt file, expense report) which can readily be adapted to, for example, identify and track patterns of credit card usage. It will also be apparent to those skilled in the art that such a network of linked documents can readily be extended to carry out other applications simply by the addition of relatively simple macros triggered by appropriate events. For example, a hold on further credit could be easily implemented by a skilled software developer by means of a simple macro incorporated into an expense report Rheodoc to be triggered by detection of a predetermined unusual credit usage pattern, without need for the developer to understand the entire credit card application or to know or control the particular files to be accessed. And such a network of Rheodocs can be easily extended to "scout" for other unanticipated situations by addition of relatively simple macros, with appropriately chosen triggers, to Rheodocs in the network.

While this invention has been described in connection with what is presently considered to be the most practical and preferred embodiment, it is to be understood that the invention is not limited to the disclosed embodiment, but on the contrary, is intended to cover various modifications and equivalent arrangements included within the scope of the appended claims.

## Claims

1. A method for creating a system of linked documents on a network (42, 44, 48), said network including a home data processing system (48) communicating with a host data processing system (42), said method comprising the steps of:
a) storing a first file, said first file including a document and being linked to a first macro, on said home system (48), said home system having a home operating system;
b) said home operating system controlling said home system (48) to execute (78) said first macro in response to a first trigger event;
c) said first macro controlling said home system (48) to inspect (80) other home system files and link selected ones of said other home system files to said first file in accordance with predetermined criteria including evaluation of security and priority rules to determine if execution of the first macro is permitted;
d) storing a second file, said second file including a second document and being linked to a second macro, on said host system (42), said host system (42) having a host operating system;
e) said host operating system controlling said host system (42) to execute said second macro in response to a second trigger event; and
f) said second macro controlling said host system (42) to open and update further host system files by processing further files, the opening of which further host system files triggers a third macro (61) which links selected ones of said further host system files to said first file, in accordance with predetermined criteria including evaluation of security and priority rules to decide if execution is permitted by determining whether the third macro is allowed to access said selected ones of said further host system files, and if access is allowed, said third macro links said selected further host system files to said first file by sending a file of linking data to said home system (48), and said first trigger event being input to said home system (48) of said file of linking data.

2. A method as described in Claim 1, where said predetermined criteria are derived in accordance with values of predetermined data elements of said document in said first file.

3. A method as described in Claim 1, where at least one of said other host files includes keywords and said second macro controls said host system to inspect said keywords and list said one of said other host files if said keywords meet said predetermined criteria.

4. A method as described in Claim 1, where at least one of said other host files comprises self-describing data organized in a manner that can be interpreted by said second macro.

5. A method as described in Claim 1, where said host operating system includes a virtual machine and said second macro is expressed in executable code for said virtual machine.

6. A data processing network for creating a system of linked documents on the network, said network including:
a home data processing system (48) communicating with a host data processing system (42);
means for storing a first file, said first file including a document and being linked to a first macro, on said home system (48), said home system having a home operating system;
means for causing said home operating system (48) to control said home system to execute (78) said first macro in response to a first trigger event;
means for causing said first macro to control said home system to inspect (80) other home system files and link selected ones of said other home system files to said first file in accordance with predetermined criteria including evaluation of security and priority rules to determine if execution of the first macro is permitted;
means for storing a second file, said second file including a second document and being linked to a second macro, on said host system (42), said host system having a host operating system;
means for causing said host operating system (42) to control said host system to execute (58) said second macro in response to a second trigger event; and
means for causing said second macro to control said host system (42) to open and update further host system files by processing further files, the opening of which further host system files triggers a third macro (61) which links selected ones of said further host system files to said first file in accordance with predetermined criteria, including evaluation of security and priority rules to decide if execution is permitted by determining whether the third macro is allowed to access said selected ones of said further host system files, and if access is allowed to cause said third macro to link (67) said selected further host system files to said first file by sending a file of linking data to said home system (48), and said first trigger event being input to said home system (48) of said file of linking data.

7. A computer readable medium carrying a computer program which, when loaded into a computer, is operable to cause the computer to perform the method of any one of Claims 1 to 5.

## Patentansprüche

1. Ein Verfahren zum Erzeugen eines Systems von verbundenen Dokumenten auf einem Netzwerk (42, 44, 48), wobei das Netzwerk ein Heimdaten-Verarbeitungssystem (48) enthält, das mit einem Host-Datenverarbeitungssystem (42) kommuniziert, wobei das Verfahren die Schritte umfasst:
a) Speichern einer ersten Datei, wobei die erste Datei ein Dokument enthält und verbunden ist mit einem ersten Makro, auf dem Heimsystem (48), wobei das Heimsystem ein Heimbetriebsystem aufweist;
b) wobei das Heimbetriebssystem das Heimsystem (48) steuert zum Ausführen (78) des ersten Makros in Ansprechen auf ein erstes Triggerereignis;
c) wobei das erste Makro das Heimsystem (48) steuert zum Überprüfen (80) anderer Heimsystemdateien und ausgewählte der anderen Heimsystemdateien mit der ersten Datei verbindet gemäß vorbestimmter Kriterien, enthaltend eine Evaluierung hinsichtlich Sicherheit und Prioritätsregeln zum Bestimmen, ob eine Ausführung des ersten Makros erlaubt ist;
d) Speichern einer zweiten Datei, wobei die zweite Datei ein zweites Dokument enthält und verbunden wird mit einem zweiten Makro, auf dem Host-System (42), wobei das Host-System (42) ein Host-Betriebssystem aufweist;
e) das Host-Betriebssystem das Host-System (42) steuert zum Ausführen des zweiten Makros in Ansprechen auf ein zweites Trigger-Ereignis; und
f) wobei das zweite Makro das Host-System (42) steuert zum Öffnen und Aktualisieren weiterer Host-Systemdateien durch Verarbeiten weiterer Dateien, wobei das Öffnen von diesen weiteren Host-Systemdateien ein drittes Makro (61) triggert, das ausgewählte der weiteren Host-Systemdateien mit der ersten Datei verbindet gemäß vorbestimmter Kriterien einschließlich einer Evaluierung einer Sicherheit und Prioritätsregeln zum Entscheiden, ob eine Ausführung erlaubt wird durch Bestimmen, ob dem dritten Makro erlaubt wird, auf ausgewählte der weiteren Host-Systemdateien zuzugreifen, und falls ein Zugriff erlaubt wird, das dritte Makro die ausgewählten weiteren Host-Systemdateien mit der ersten Datei verbindet durch Senden einer Datei eines Verbindens von Daten mit dem Heimsystem (48), und wobei das erste Triggerereignis eingegeben wird in das Heimsystem (48) der Datei von Verbindungsdaten.

2. Ein Verfahren, wie in Anspruch 1 beschrieben, wobei die vorbestimmten Kriterien abgeleitet werden gemäß Werten von vorbestimmten Datenelementen des Dokuments in der ersten Datei.

3. Ein Verfahren, wie in Anspruch 1 beschrieben, wobei mindestens eine der anderen Host-Dateien Schlüsselwörter enthält, und das zweite Makro das Host-System steuert zum Überprüfen der Schlüsselwörter und Auflisten der einen der anderen Host-Dateien, falls die Schlüsselwörter die vorbestimmten Kriterien erfüllen.

4. Ein Verfahren, wie in Anspruch 1 beansprucht, wobei mindestens eine der anderen Host-Dateien selbstbeschreibende Daten umfasst, die in einer Art und Weise organisiert sind, die interpretiert werden kann durch das zweite Makro.

5. Ein Verfahren, wie in Anspruch 1 beschrieben, wobei das Host-Betriessystem eine virtuelle Maschine enthält, und das zweite Makro ausgedrückt wird als ausführbarer Code für die virtuelle Maschine.

6. Ein Datenverarbeitungsnetzwerk zum Erzeugen eines Systems von verbundenen Dokumenten auf dem Netzwerk, wobei das Netzwerk enthält:
ein Heimdaten-Verarbeitungssystem (48), das mit einem Host-Datenverarbeitungssystem (42) kommuniziert;
Mittel zum Speichern einer ersten Datei, wobei die erste Datei ein Dokument enthält und verbunden ist mit einem ersten Makro, auf dem Heimsystem (48), wobei das Heimsystem ein Heimbetriebsystem aufweist;
Mittel zum Hervorrufen, dass das Heimbetriebssystem (48) das Heimsystem steuert zum Ausführen (78) des ersten Makros in Ansprechen auf ein erstes Triggerereignis;
Mittel zum Hervorrufen, dass das erste Makro das Heimsystem steuert zum Überprüfen (80) anderer Heimsystemdateien und Verbinden ausgewählter der anderen Heimsystemdateien mit der ersten Datei gemäß vorbestimmter Kriterien, einschließlich Evaluierung einer Sicherheit und Prioritätsregeln zum Bestimmen, ob eine Ausführung des ersten Makros erlaubt ist;
Mittel zum Speichern einer zweiten Datei, wobei die zweite Datei ein zweites Dokument enthält und verbunden ist mit einem zweiten Makro, auf dem Host-System (42), wobei das Host-System ein Host-Betriebssystem aufweist;
Mittel zum Hervorrufen, dass das Host-Betriebssystem (42) das Host-System steuert zum Ausführen (58) des zweiten Makros in Ansprechen auf ein.zweites Trigger-Ereignis; und
Mittel zum Hervorrufen, dass das zweite Makro das Host-System (42) steuert zum Öffnen und Aktualisieren weiterer Host-Systemdateien durch Verarbeiten weiterer Dateien, wobei das Öffnen von den weiteren Host-Systemdateien ein drittes Makro (61) triggert, das ausgewählte der weiteren Host-Systemdateien mit der ersten Datei verbindet gemäß vorbestimmter Kriterien, einschließlich einer Evaluierung einer Sicherheit und Prioritätsregeln zum Entscheiden, ob eine Ausführung erlaubt ist durch Bestimmen, ob dem dritten Makro erlaubt wird, auf ausgewählte der weiteren Host-Systemdateien zuzugreifen, und falls ein Zugriff erlaubt wird zum Hervorrufen, dass das dritte Makro die ausgewählten weiteren Host-Systemdateien mit der ersten Datei verbindet durch Senden einer Datei von Verbindungsdaten an das Heimsystem (48), und wobei das erste Triggerereignis eingegeben wird an das Heimsystem (48) der Datei der Verbindungsdaten.

7. Ein computerlesbares Medium, das ein Computerprogramm trägt, das, wenn in einen Computer geladen, betriebsfähig ist, um im Computer hervorzurufen, das Verfahren nach einem der Ansprüche 1 bis 5 auszuführen.

## Revendications

1. Procédé pour la création d'un système de documents liés sur un réseau (42, 44, 48), ledit réseau comprenant un système de traitement de données local (48) communiquant avec un système de traitement de données hôte (42), ledit procédé comprenant les étapes consistant à :
a) stocker un premier fichier, ledit premier fichier comprenant un document et étant lié à une première macro-commande, sur ledit système hôte (48), ledit système hôte ayant un système d'exploitation hôte ;
b) ledit système d'exploitation hôte commandant ledit système local (48) pour qu'il exécute (78) ladite première macro-commande en réponse à un premier événement déclencheur ;
c) ladite première macro-commande commandant ledit système local (48) afin qu'il inspecte (80) d'autres fichiers du système local et qu'il lie certains, sélectionnés, desdits autres fichiers du système local audit premier fichier en conformité avec des critères prédéterminés comprenant l'évaluation de règles de sécurité et de priorité afin de déterminer si l'exécution de la première macro-commande est permise ;
d) stocker un second fichier, ledit second fichier comprenant un second document et étant lié à une seconde macro-commande, sur ledit système hôte (42), ledit système hôte (42) ayant un système d'exploitation hôte ;
e) ledit système d'exploitation hôte commandant ledit système hôte (42) afin qu'il exécute ladite seconde macro-commande en réponse à un second événement déclencheur ; et
f) ladite seconde macro-commande commandant ledit système hôte (42) afin qu'il ouvre et mette à jour des fichiers supplémentaires du système hôte en traitant des fichiers supplémentaires, l'ouverture de ces fichiers supplémentaires du système hôte déclenchant une troisième macro-commande (61) qui lie certains, sélectionnés, desdits fichiers supplémentaires du système hôte audit premier fichier, en conformité avec des critères prédéterminés comprenant l'évaluation de règles de sécurité et de priorité afin de décider si son exécution est permise en déterminant si la troisième macro-commande a l'autorisation d'accéder à certains, sélectionnés, desdits fichiers supplémentaires du système hôte audit premier fichier en envoyant un fichier de données de liaison audit système local (48), et ledit premier événement déclencheur étant fourni en entrée audit système local (48) dudit fichier de données de liaison.

2. Procédé selon la revendication 1, dans lequel lesdits critères prédéterminés sont déduits en conformité avec des valeurs d'éléments de données prédéterminés dudit document dans ledit premier fichier.

3. Procédé selon la revendication 1, dans lequel l'un desdits autres fichiers hôtes comprend des mots clés et ladite deuxième macro-commande commande ledit système hôte afin qu'il inspecte lesdits mots clés et indique dans une liste ledit un desdits autres fichiers hôtes si lesdits mots clés respectent lesdits critères prédéterminés.

4. Procédé selon la revendication 1, dans lequel au moins l'un desdits autres fichiers hôtes comprend des données d'auto-description organisées de façon qu'elles puissent être interprétées par ladite seconde macro-commande.

5. Procédé selon la revendication 1, dans lequel ledit système d'exploitation hôte comprend une machine virtuelle et ladite seconde macro-commande est exprimée dans un code exécutable par ladite machine virtuelle.

6. Réseau de traitement de données pour créer un système de documents liés sur un réseau, ledit réseau comprenant :
un système de traitement de données local (48) communiquant avec un système de traitement de données hôte (42) ;
un moyen destiné à stocker un premier fichier, ledit premier fichier comprenant un document et étant lié à une première macro-commande, sur ledit système local (48), ledit système local ayant un système d'exploitation local ;
un moyen destiné à faire en sorte que ledit système d'exploitation local (48) commande ledit système local afin qu'il exécute (78) ladite première macro-commande en réponse à un premier événement déclencheur ;
un moyen destiné à faire en sorte que ladite première macro-commande commande ledit système local afin qu'il inspecte (80) d'autres fichiers du système local et qu'il lie certains, sélectionnés, desdits autres fichiers du système local audit premier fichier en conformité avec des critères prédéterminés comprenant l'évaluation de règles de sécurité et de priorité afin de déterminer si l'exécution de la première macro-commande est permise ;
un moyen destiné à stocker un second fichier, ledit second fichier comprenant un second document et étant lié à une seconde macro-commande, sur ledit système hôte (42), ledit système hôte ayant un système d'exploitation hôte ;
un moyen destiné à faire en sorte que ledit système d'exploitation hôte (42) commande ledit système hôte afin qu'il exécute (58) ladite seconde macro-commande en réponse à un second événement déclencheur ; et
un moyen destiné à faire en sorte que ladite seconde macro-commande commande ledit système hôte (42) afin qu'il ouvre et mette à jour des fichiers supplémentaires du système hôte en traitant des fichiers supplémentaires, l'ouverture de ces fichiers supplémentaires du système hôte déclenchant une troisième macro-commande (61) qui lie certains, sélectionnés, desdits fichiers supplémentaires du système hôte audit premier fichier, en conformité avec des critères prédéterminés, comprenant l'évaluation de règles de sécurité et de priorité afin de décider si son exécution est permise en déterminant si la troisième macro-commande a l'autorisation d'accéder auxdits certains, sélectionnés, desdits fichiers supplémentaires du système hôte, et, si l'accès est autorisé, afin de faire en sorte que ladite troisième macro-commande lie (67) lesdits fichiers supplémentaires sélectionnés du système hôte audit premier fichier en envoyant un fichier de données de liaison audit système local (48), et ledit premier événement déclencheur étant fourni en entrée audit système local (48) dudit fichier de données de liaison.

7. Support lisible par ordinateur portant un programme informatique qui, lorsqu'il est chargé dans un ordinateur, a pour fonction de faire en sorte que l'ordinateur exécute le procédé de l'une quelconque des revendications 1 à 5.
